# EUROPEAN PATENT APPLICATION

(11) **EP 4 435 915 A2**
(43) Date of publication of application: **25.09.2024**
(21) Application number: 24164467.3
(22) Date of filing: 19.03.2024
(51) Int. Cl.: H01M 10/04, H01M 10/0587, H01M 50/531

(54) **ELECTRODE ASSEMBLY, ELECTROCHEMICAL APPARATUS AND ELECTRICAL DEVICE**

(30) Priority: 20.03.2023 CN 202310269177
(71) Applicant: Ningde Amperex Technology Ltd., Ningde City, Fujian 352100 (CN)
(72) Inventor: JIN, Zhesheng, Ningde City, Fujian Province, People s Republic of China, 352100 (CN); LIU, Kai, Ningde City, Fujian Province, People s Republic of China, 352100 (CN)
(74) Representative: Icosa

(57) **Abstract**

An electrode assembly (100) includes a first electrode tab (10), a first electrode plate (20), a second electrode plate (30). The first electrode plate (20) includes a first current collector (20a) and a first active substance layer (20b). The first current collector (20a) includes a first section (21), a third section (23) and a second section (22) connected sequentially along a first direction (X). Along a second direction (Y), the third section (23) includes a first dissociative portion (231) and a first connection portion (232) connected sequentially. Along the first direction (X), one side of the first dissociative portion (231) is dissociated from the first section (21), while the other side of the first dissociative portion (231) is dissociated from the second section (22). The first dissociative portion (231) has a first empty foil area (2311) without the first active substance layer (20b) on the surface. One side of the first empty foil area (2311) in a third direction (Z) is connected to the first electrode tab (10).

## Description

### BACKGROUND

### 1. Technical Field

This application relates to the technical field of energy storage, in particular to an electrode assembly, an electrochemical apparatus and an electrical device.

### 2. Description of the Related Art

In order to adapt to the miniaturization and portability of electronic devices such as mobile phones, laptop computers and wearable devices, as well as the development trend of long endurance of power equipment such as electric vehicles and electric motorcycles, it is required that the cell should develop towards the direction of increasing energy density. Improving the spatial utilization rate of the internal structure of the cell is an important means to improve the energy density of the cell.

At present, the electrode assembly of the wound cell includes an electrode plate and an electrode tab connected to the electrode plate. The method for the connection between the electrode tab and the electrode plate is usually to remove the active substance layer on the electrode plate to obtain an empty foil area in which the current collector is exposed, and to weld the electrode tab to the empty foil area. Since the electrode tab itself occupies a certain thickness, in a case that the active substance layer on the electrode plate is thin, the electrode tab may go beyond the electrode plate in the thickness direction, resulting in low space utilization rate of the electrode assembly in the thickness direction.

### SUMMARY

In view of this, it is necessary to provide an electrode assembly conducive to improving the spatial utilization rate.

Some embodiments of this application provide an electrode assembly, including a first electrode tab, a first electrode plate, a second electrode plate and a separator, the separator being located between the first electrode plate and the second electrode plate, the first electrode plate, the separator and the second electrode plate being stacked and wound, the first electrode plate including a first current collector and a first active substance layer, the first current collector including a first section, a second section and a third section, a surface of the first section being at least partially provided with the first active substance layer, a surface of the second section being at least partially provided with the first active substance layer; along a first direction, the third section being located between the first section and the second section; along a second direction, the third section including a first dissociative portion and a first connection portion connected sequentially, the first connection portion connecting the first section and the second section; along the first direction, one side of the first dissociative portion being dissociated from the first section, the side of the first dissociative portion opposite to the first section being dissociated from the second section; the first dissociative portion having a first empty foil area without the first active substance layer, one side of the first empty foil area in a third direction being connected to the first electrode tab, the third direction being a thickness direction of the first electrode plate, every two of the third direction, the first direction and the second direction being perpendicular to each other.

In the embodiments above, the first dissociative portion is dissociated from the first section and the second section, which is conducive to making the first dissociative portion move along the third direction relative to the first section and the second section, thus improving the moving distance of the first electrode tab along the third direction relative to the first section and the second section, enabling the first electrode tab to not go beyond the first active substance layer of the first section and the second section in the third direction, and improving the spatial utilization rate of the electrode component in the third direction. In addition, the first electrode tab is connected to the first dissociative portion and the first dissociative portion is dissociated from the first section and the second section, which is conducive to reducing the deformation of the third section when the first dissociative portion moves along the third direction, thus reducing the risk that the first active substance layer at the boundary of the area without the first active substance layer and the area with the first active substance layer is separated from the first current collector.

In some embodiments, a first gap is provided between the first dissociative portion and the first section, and a second gap is provided between the first dissociative portion and the second section.

In the embodiments above, the first dissociative portion is dissociated from the first section through the first gap and the first dissociative portion is dissociated from the second section through the second gap, which is conducive to reducing the cut-off part of the first electrode plate and increasing the retained part of the first electrode plate, thus improving the energy density of the electrode assembly.

In some embodiments, the first gap and the second gap both extend along the second direction.

In the embodiments above, the first gap and the second gap both extend along the second direction, which is conducive to making the shape of the first dissociative portion more regular, thus facilitating the connection between the first electrode tab and the first empty foil area of the first dissociative portion.

In some embodiments, an extension direction of the first gap and an extension direction of the second gap are both inclined relative to the second direction; along the second direction, a distance between the first gap and the first electrode tab in the first direction gradually decreases, and a distance between the second gap and the first electrode tab in the first direction gradually decreases.

In the embodiments above, the distance between the first gap and the first electrode tab in the first direction gradually decreases, and the distance between the second gap and the first electrode tab in the first direction gradually decreases, which is conducive to reducing the risk that the separation tool such as cutting knife or punching head interferes with the first electrode tab adhesive in the process of forming the first gap and the second gap.

In some embodiments, when viewed along the third direction, a projection of the first electrode tab on the first electrode plate has a length of Wi along the second direction, and along the second direction, a length of the first dissociative portion is W₂, which satisfies W₁/2≤W₂≤3W₁/2.

In the embodiments above, W₁ and W₂ satisfy W₁/2≤W₂≤3W₁/2, which is conducive to making the moving distance of the first dissociative portion along the third direction satisfy the requirement that the first electrode tab moves to a position in the third direction without going beyond the first active substance layer of the first section and the second section, and also to reducing the risk that the third section is separated from the first section and the second section since the length of the first gap and the second gap along the second direction is too large.

In some embodiments, the first dissociative portion has a first wall facing to the first section, the first section has a second wall facing to the first dissociative portion, a third wall is connected between the first wall and the second wall, and along the first direction, the distance between the first wall and the second wall is D₁, which satisfies W₂≥D₁≥W₂/20.

In the embodiments above, a gap is formed between the first dissociative portion and the first section. When the first electrode plate is stressed, D₁ and W₂ are enabled to satisfy W₂≥D₁≥W₂/20, which is conducive to reducing the risk of cracking at the third wall due to stress concentration at the third wall since D₁ is too small. In addition, by limiting D₁≤W₂, D₁ is not too large, which is conducive to reducing the risk that the part of the first electrode plate originally provided with the first active substance layer is removed, thus improving the energy density of the electrode assembly.

In some embodiments, the first dissociative portion has a first wall facing to the first section, the first section has a second wall facing to the first dissociative portion, a third wall is connected between the first wall and the second wall, and the third wall is a concave arc-shaped wall.

In the embodiments above, the third wall is a concave arc-shaped wall, which is conducive to reducing the stress on the third wall, thus reducing the risk of cracking at the third wall.

In some embodiments, along the first direction, the distance between the first wall and the second wall is D₁, and a diameter corresponding to the third wall is T₁, which satisfies D₁≤T₁≤5D₁.

In the embodiments above, the diameter T₁ corresponding to the third walls satisfies D₁≤T₁≤5D₁, which can achieve the effect that the third wall is an arc-shaped wall, and is conducive to reducing the risk of stress concentration since the transition between the third wall and the first wall is not mild enough due to the excessive curvature of the third wall, or to reducing the risk of stress concentration since the transition between the third wall and the second wall is not mild enough.

In some embodiments, the first dissociative portion further has a collection layer area with the first active substance layer, and along the second direction, the collection layer area is located between the first connection portion and the first empty foil area.

In the embodiments above, the provided collection layer area is conducive to increasing the area of the first active substance layer, thus improving the energy density of the electrode assembly. In addition, the collection layer area is provided between the first connection portion and the first empty foil area, rather than on the side of the first empty foil area facing to the first section or the side of the first empty foil area facing to the second section, thus reducing the risk that the first active substance layer in the collection layer area interferes with the movement of the first electrode tab in the third direction, and ensuring that the first electrode tab does not go beyond the first active substance layer of the first section and the second section in the third direction.

In some embodiments, the surface of the first section has a first side empty foil area without the first active substance layer, and along the first direction, the first side empty foil area is located on one side of the first empty foil area, and the first side empty foil area is dissociated from the first empty foil area.

In the embodiments above, the first side empty foil area is provided, so that the two opposite sides of the part where the first dissociative portion is separated from the first section are not provided with the first active substance layer, thus reducing the risk that the first active substance layer interferes with the separation process, and facilitating the separation between the first dissociative portion and the first section. In the actual production process, common methods such as cutting, punching and laser may be used to achieve the separation between the first dissociative portion and the first section.

In some embodiments, the first dissociative portion and the first connection portion are not provided with the first active substance layer.

In the embodiments above, the first dissociative portion and the first connection portion are not provided with the first active substance layer, so that the first electrode tab can extend out of the first electrode plate along the second direction, thus making the same first electrode tab have two positions from which the polarity of the first electrode plate can be led out.

In addition, this application further provides an electrochemical apparatus capable of improving energy density and reliability.

Some embodiments of this application provide an electrochemical apparatus, including a housing and the electrode assembly in any one of the embodiments above, at least a portion of the electrode assembly being provided in the housing.

In the embodiments above, the first electrode tab of the electrode assembly does not go beyond the first active substance layer of the first section and the second section in the third direction, thus improving the spatial utilization rate of the electrode assembly in the third direction, and improving the energy density of the electrochemical apparatus. The first dissociative portion is dissociated from the first section and the second section, which is conducive to reducing the deformation of the third section when the first dissociative portion moves along the third direction, thus reducing the risk that the first active substance layer at the boundary of the area without the first active substance layer and the area with the first active substance layer is separated from the first current collector, and improving the reliability of the electrochemical apparatus.

In addition, this application further provides an electrical device capable of improving the use duration after charging and the service life.

Some embodiments of this application provide an electrical device, including a device main body and the electrochemical apparatus in any one of the embodiments above, the electrochemical apparatus being mounted to the device main body.

In the embodiments above, the energy density and reliability of the electrochemical apparatus are improved, which is conducive to improving the use duration after charging and the service life of the electrical device, and reducing the failure rate of the electrical device.

In this application, an electrode assembly includes a first electrode tab, and a first electrode plate, a second electrode plate and a separator which are wound. The first electrode plate includes a first section, a second section and a third section. Along the second direction, the third section includes a first dissociative portion and a first connection portion connected sequentially, Along the first direction, one side of the first dissociative portion is dissociated from the first section, the side of the first dissociative portion opposite to the first section is dissociated from the second section, and a first empty foil area on the first dissociative portion is connected with the first electrode tab. The first dissociative portion being dissociated from the first section and the second section is conducive to increasing the moving distance of the first electrode tab along the third direction relative to the first section and the second section, so that the first electrode tab does not go beyond the first active substance layer of the first section and the second section in the third direction, thus improving the spatial utilization rate of the electrode assembly in the third direction. In addition, the first dissociative portion being dissociated from the first section and the second section is conducive to reducing the deformation of the third section when the first dissociative portion moves along the third direction, thus reducing the risk that the first active substance layer at the boundary of the area without the first active substance layer and the area with the first active substance layer is separated from the first current collector.

### BRIEF DESCRIPTION OF DRAWINGS

FIG. 1 illustrates a sectional schematic diagram of an electrode assembly according to an embodiment of this application.
FIG. 2 illustrates a partial schematic diagram of an electrode assembly according to an embodiment of this application.
FIG. 3 illustrates a partial side view of an electrode assembly in the existing technology.
FIG. 4 illustrates a partial side view of an electrode assembly according to an embodiment of this application.
FIG. 5 illustrates a partial schematic diagram of an electrode assembly according to an embodiment of this application.
FIG. 6 illustrates a partial schematic diagram of an electrode assembly according to an embodiment of this application.
FIG. 7 illustrates a partial schematic diagram of an electrode assembly according to an embodiment of this application.
FIG. 8 illustrates a partial schematic diagram of an electrode assembly according to an embodiment of this application.
FIG. 9 illustrates a partial side view of an electrode assembly according to an embodiment of this application.
FIG. 10 illustrates a partial side view of an electrode assembly according to an embodiment of this application.
FIG. 11 illustrates an exploded schematic diagram of an electrochemical apparatus according to an embodiment of this application.
FIG. 12 illustrates a schematic diagram of an electrical device according to an embodiment of this application.

Description of reference signs of main components: 100-electrode assembly, 10-first electrode tab, 11-first metal part, 12-first electrode tab adhesive, 20-first electrode plate, 21-first section, 211-second wall, 212-first side empty foil area, 22-second section, 221-second side empty foil area, 23-third section, 231-first dissociative portion, 2311-first empty foil area, 2312-first wall, 2313-collection layer area, 232-first connection portion, 233-first gap, 234-second gap, 24-third wall, 20a-first current collector, 20b-first active substance layer, 30-second electrode plate, 31-fourth section, 32-fifth section, 33-sixth section, 331-second dissociative portion, 3311-second empty foil area, 332-second connection portion, 30a-second current collector, 30b-second active substance layer, 40-separator, 50-second electrode tab, 51-second metal part, 52-second electrode tab adhesive, 60-first insulating adhesive, 70-second insulating adhesive, 101-cutting knife, 200-housing, 201-first portion, 202-second portion, 1000-electrochemical apparatus, 2000-device main body, 1-electrical device, X-first direction, Y-second direction, Z-third direction.

### DETAILED DESCRIPTION

The technical solution in the embodiments of this application will be described below with reference to the drawings in the embodiments of this application. Obviously, the described embodiments are only a part of the embodiments of this application, not all of them.

It should be noted that when a component is considered to be "connected" to another component, it may be directly connected to another component or there may be an intermediate component at the same time. When a component is considered "provided" on another component, it may be directly provided on another component or there may be an intermediate component at the same time. The terms "top", "bottom", "up", "down", "left", "right", "front", "back", and similar expressions used herein are for descriptive purposes only.

The term "perpendicular" is used to describe the ideal state between two components. In actual production or use, there may be an approximately perpendicular state between two components. For example, by describing in conjunction with numerical values, "perpendicular" may refer to that an included angle is between two straight lines is 90°±10°, "perpendicular" may also refer to that a dihedral angle between two planes is 90°±10°, and "perpendicular" may also refer to that an included angle between a straight line and a plane is 90°±10°. The two components described as "perpendicular" may not be absolute straight lines or planes, but may be roughly straight lines or planes. From a macro perspective, if the overall extension direction is straight lines or planes, the components may be considered as "straight lines" or "planes".

It should be noted that when a parameter is more than, equal to, or less than a certain endpoint value, it should be understood that a tolerance of ±5% is allowed for the endpoint value.

Unless otherwise defined, all technical and scientific terms used herein have the same meanings as those commonly understood by technical personnel in the technical field to which this application belongs. The terms used in the description of this application herein are only for the purpose of describing specific embodiments and are not intended to limit this application.

This application discloses an electrode assembly. The electrode assembly includes a first electrode tab, a first electrode plate, a second electrode plate and a separator. The separator is located between the first electrode plate and the second electrode plate. The first electrode plate, the separator and the second electrode plate are stacked and wound. The first electrode plate includes a first current collector and a first active substance layer. The first current collector includes a first section, a second section and a third section. A surface of the first section is at least partially provided with the first active substance layer. A surface of the second section is at least partially provided with the first active substance layer. Along a first direction, the third section is located between the first section and the second section. Along a second direction, the third section includes a first dissociative portion and a first connection portion connected sequentially. The first connection portion connects the first section and the second section. Along the first direction, one side of the first dissociative portion is dissociated from the first section, and the side of the first dissociative portion opposite to the first section is dissociated from the second section. The first dissociative portion has a first empty foil area without the first active substance layer. One side of the first empty foil area in a third direction is connected to the first electrode tab. The third direction is a thickness direction of the first electrode plate. Every two of the third direction, the first direction and the second direction are perpendicular to each other.

The first dissociative portion is dissociated from the first section and the second section, which is conducive to making the first dissociative portion move along the third direction relative to the first section and the second section, thus improving the moving distance of the first electrode tab along the third direction relative to the first section and the second section, enabling the first electrode tab to not go beyond the first active substance layer of the first section and the second section in the third direction, and improving the spatial utilization rate of the electrode assembly in the third direction. In addition, the first electrode tab is connected to the first dissociative portion and the first dissociative portion is dissociated from the first section and the second section, which is conducive to reducing the deformation of the third section when the first dissociative portion moves along the third direction, thus reducing the risk that the first active substance layer at the boundary of the area without the active substance layer and the area with the active substance layer is separated.

Some embodiments of this application will be described below with reference to the drawings. Without causing conflict, the following embodiments and the features in the embodiments may be combined with each other.

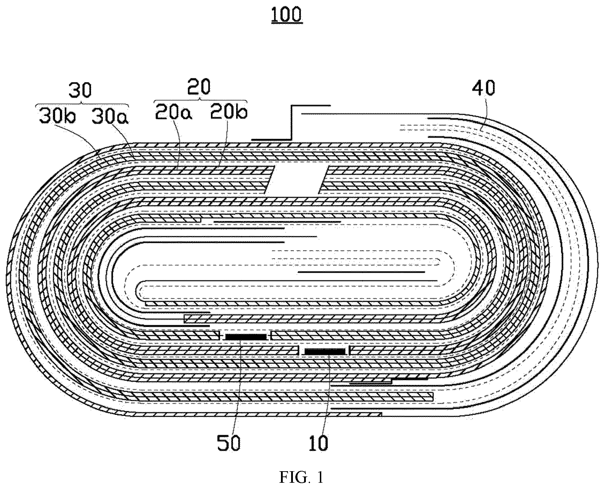

Please refer to FIG. 1. An embodiment of this application provides an electrode assembly 100. The electrode assembly 100 includes a first electrode tab 10, a first electrode plate 20, a second electrode plate 30 and a separator 40. The separator 40 is located between the first electrode plate 20 and the second electrode plate 30. The first electrode plate 20, the separator 40 and the second electrode plate 30 are stacked and wound. The first electrode tab 10 is connected to the first electrode plate 20.

The polarity of the first electrode tab 10 can be positive or negative, and the polarity of the first electrode tab 10 is the same as that of the first electrode plate 20.

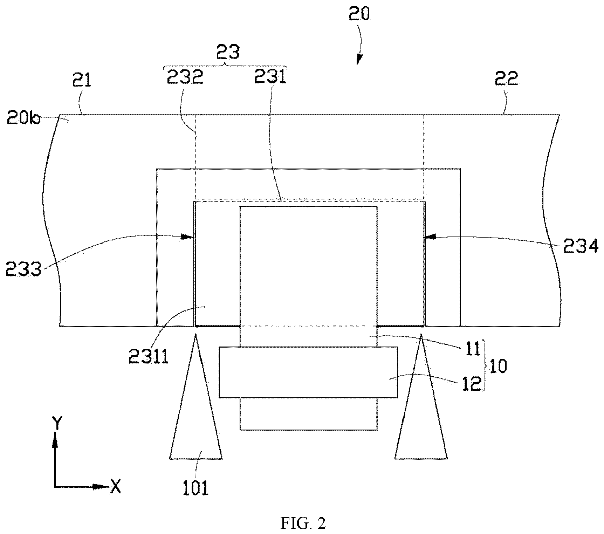

In some embodiments, referring to FIG. 2, the first electrode tab 10 includes a first metal part 11 and a first electrode tab adhesive 12. The first metal part 11 is connected to the first electrode plate 20. The material of the first metal part 11 is the same as that of the first electrode plate 20. The first electrode tab adhesive 12 is coated on the first metal part 11.

In some embodiments, the first metal part 11 and the first electrode plate 20 are connected by welding. The welding method may be resistance welding, laser welding, arc welding or ultrasonic welding.

In some embodiments, the first electrode plate 20 may be a positive electrode plate or a negative electrode plate, the second electrode plate 30 may be a positive electrode plate or a negative electrode plate, and the polarity of the first electrode plate 20 is opposite to that of the second electrode plate 30. For example, the first electrode plate 20 is a positive electrode plate, and the second electrode plate 30 is a negative electrode plate. For another example, the first electrode plate 20 is a negative electrode plate, and the second electrode plate 30 is a positive electrode plate.

In some embodiments, the first electrode plate 20 includes a first current collector 20a and a first active substance layer 20b. The first active substance layer 20b is provided on a surface of the first current collector 20a. The second electrode plate 30 includes a second current collector 30a and a second active substance layer 30b. The second active substance layer 30b is provided on a surface of the second current collector 30a. Each of the first current collector 20a and the second current collector 30a includes a metal layer. A material of the first active substance layer 20b is different from that of the second active substance layer 30b.

The positive electrode plate may be combined onto a metal layer of at least one of aluminum, platinum, nickel, tantalum, titanium and the like by using positive electrode slurry. The positive electrode slurry combined onto the metal layer forms a positive electrode active substance layer. The negative electrode plate may be combined onto a metal layer of at least one of copper, platinum, nickel, tantalum, titanium and the like by using negative electrode slurry. The negative electrode slurry combined onto the metal layer forms a negative electrode active substance layer. As an example, the first electrode plate 20 is a positive electrode plate, the first current collector 20a includes a metal aluminum layer, the second electrode plate 30 is a negative electrode plate, and the second current collector 30a includes a metal copper layer.

In some embodiments, the first active substance layer 20b is coated on a surface of the first current collector 20a through a coating process, and the second active substance layer 30b is coated on a surface of the second current collector 30a through a coating process.

Referring to FIG. 1, the separator 40 is provided between the first electrode plate 20 and the second electrode plate 30 to separate the first electrode plate 20 and the second electrode plate 30 with different polarities.

In some embodiments, the separator 40 is a film material that can insulate, such as a polyethylene film, a polypropylene film, a polyester film or a polyimide film, so as to separate the first electrode plate 20 and the second electrode plate 30.

Referring to FIG. 1 and FIG. 2, the first current collector 20a includes a first section 21, a second section 22, and a third section 23. Along a first direction X, the third section 23 is located between the first section 21 and the second section 22. One of the first section 21 and the second section 22 serves as a starting section for the winding of the first electrode plate 20, while the other of the first section 21 and the second section 22 serves as an ending section for the winding of the first electrode plate 20. The surfaces of the first section 21 and the second section 22 are at least partially provided with the first active substance layer 20b. The third section 23 is connected to the first electrode tab 10.

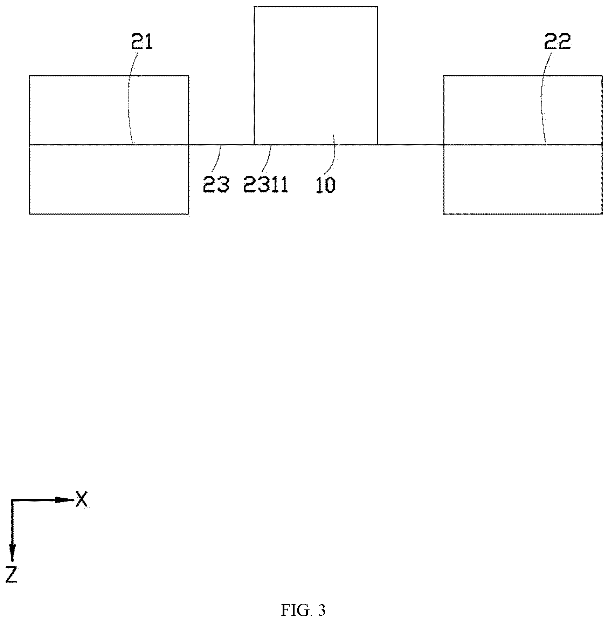

In the existing technology, referring to FIG. 3, the third section 23 is provided with a first empty foil area 2311 without the first active substance layer 20b. The first empty foil area 2311 is connected to the first section 21 and the second section 22. The first electrode tab 10 is connected to the first empty foil area 2311. The first electrode tab 10 goes beyond the first active substance layer 20b of the first section 21 and the second section 22 along the thickness direction of the first electrode plate. In the first electrode plate of a wound structure, the first electrode tab 10 is squeezed along the thickness direction of the first electrode plate, causing the first electrode tab 10 to move a certain distance along the thickness direction of the first electrode plate. Since the first empty foil area 2311 is connected to the first section 21 and the second section 22, the moving distance of the first electrode tab 10 is limited by the first section 21 and the second section 22, Therefore, the first electrode tab 10 still goes beyond the first active substance layer 20b of the first section 21 and the second section 22 along the thickness direction of the first electrode plate, and the movement of the first electrode tab 10 drives the deformation of the third section 23, which easily causes the first active substance layer 20b at the boundary of the first empty foil area 2311 to separate.

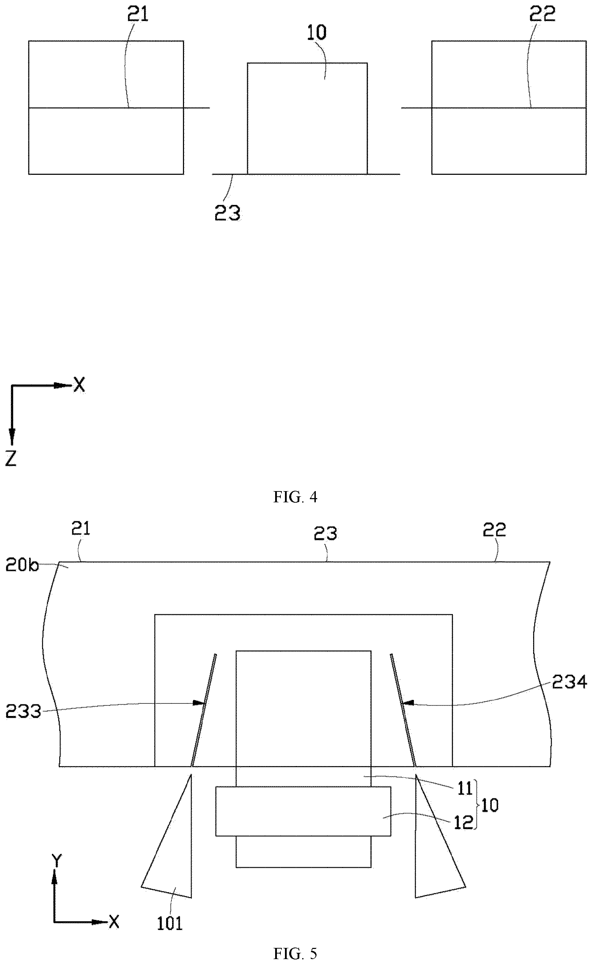

In this application, referring to FIG. 2 and FIG. 4, the third section 23 includes a first dissociative portion 231 and a first connection portion 232 sequentially connected along a second direction Y. The first connection portion 232 connects the first section 21 and the second section 22. Along the first direction X, one side of the first dissociative portion 231 is dissociated from the first section 21, and the side of the first dissociative portion 231 opposite to the first section 21 is dissociated from the second section 22, which is conducive to making the first dissociative portion 231 move in a third direction Z relative to the first section 21 and the second section 22. The third direction Z is a thickness direction of the first electrode plate. Every two of the third direction Z, the first direction X and the second direction Y are perpendicular to each other. The surface of the first dissociative portion 231 has a first empty foil area 2311 without the first active substance layer 20b. One side of the first empty foil area 2311 in the third direction Z is connected with the first electrode tab 10, which is conducive to increasing the moving distance of the first electrode tab 10 along the third direction Z relative to the first section 21 and the second section 22. In the first electrode plate of a wound structure, the first electrode tab 10 is squeezed along the third direction Z or in a direction opposite to the third direction Z, causing the first electrode tab 10 to move along the third direction Z until the first electrode tab 10 does not go beyond the first active substance layer 20b of the first section 21 and the second section 22 in the third direction Z. The first electrode tab 10 not going beyond the first active substance layer 20b of the first section 21 and the second section 22 in the third direction Z is conducive to improving the spatial utilization rate of the electrode assembly 100 in the third direction Z. In addition, the first electrode tab 10 is connected to the first dissociative portion 231 and the first dissociative portion 231 is dissociated from the first section 21 and the second section 22, which is conducive to reducing the deformation of the third section 23 when the first dissociative portion 231 moves along the third direction Z, thus reducing the risk that the first active substance layer 20b at the boundary of the area without the first active substance layer 20b and the area with the first active substance layer 20b is separated from the first current collector 20a.

In some embodiments, referring to FIG. 2, a first gap 233 is provided between the first dissociative portion 231 and the first section 21, and a second gap 234 is provided between the first dissociative portion 231 and the second section 22. In this embodiment, the first dissociative portion 231 is dissociated from the first section 21 through the first gap 233, and the first dissociative portion 231 is dissociated from the second section 22 through the second gap 234, which is conducive to reducing the cut-off part of the first electrode plate 20, increasing the retained part of the first electrode plate 20, and improving the energy density of the electrode assembly 100.

In some embodiments, referring to FIG. 1 and FIG. 2, the first gap 233 and the second gap 234 are formed by using a cutting knife 101 to cut the first electrode plate 20 along the second direction Y and cut off a part of the first electrode plate 20, so that the first gap 233 and the second gap 234 are formed in the first electrode plate 20. Cutting the first electrode plate 20 along the second direction Y is conducive to reducing the risk of deformation under stress when the first electrode plate 20 is cut.

In some embodiments, the first gap 233 and the second gap 234 are formed by using the cutting knife 101 to cut the first electrode plate 20 along a direction forming an included angle with the second direction Y and perpendicular to the third direction Z, and cut off a part of the first electrode plate 20, so that the first gap 233 and the second gap 234 are formed in the first electrode plate 20. Cutting the first electrode plate 20 in a direction forming an included angle with the second direction Y and perpendicular to the third direction Z is conducive to reducing the risk of deformation under stress when the first electrode plate 20 is cut.

In some embodiments, the first gap 233 and the second gap 234 are formed by using the cutting knife 101 to cut the first electrode plate 20 along the third direction Z, and cut off a part of the first electrode plate 20, so that the first gap 233 and the second gap 234 are formed in the first electrode plate 20. In the embodiment in which the first electrode tab 10 includes a first metal part 11 and a first electrode tab adhesive 12, the first metal part 11 of the first electrode tab 10 is welded to the first electrode plate 20. The first electrode tab adhesive 12 is located on one side of the first electrode plate 20 along a direction opposite to the second direction Y. Cutting the first electrode plate 20 along the third direction Z is conducive to reducing the risk that the cutting knife 101 interferes with the first electrode tab adhesive 12 in the cutting process of the first gap 233 and the second gap 234.

In some embodiments, the cutting knife 101 is placed at a position to be dissociated of the first electrode plate 20, and the first electrode plate 20 is wound to wind the cutting knife 101 into the wound structure. The cutting knife 101 is extracted from the wound structure and cuts off a part of the first electrode plate 20, so that the first gap 233 and the second gap 234 are formed in the first electrode plate 20. Cutting the first electrode plate 20 after winding is conducive to reducing the risk that the cut-off part of the first electrode plate 20 punctures the separator 40 in the winding process.

In some embodiments, the first gap 233 and the second gap 234 are formed by using a laser emission tool to emit laser towards the first electrode plate 20 along the second direction Y, or in a direction forming an included angle with the second direction Y and perpendicular to the third direction Z. The laser melts a part of the first electrode plate 20, thus forming the first gap 233 and the second gap 234 in the first electrode plate 20.

In some embodiments, the first gap 233 and the second gap 234 are formed by using the laser emission tool to emit laser towards the first electrode plate 20 along the third direction Z, and then moving the laser emission tool along the second direction Y or in a direction forming an included angle with the second direction Y and perpendicular to the third direction Z. The laser melts a part of the first electrode plate 20, thus forming the first gap 233 and the second gap 234 in the first electrode plate 20.

It should be noted that the methods for forming the first gap 233 and the second gap 234 are not limited to the method of cutting by using the cutting knife 101 and the laser melting method, and may be other methods such as punching that can form the first gap 233 and the second gap 234, which are omitted here.

In some embodiments, referring to FIG. 2, the first gap 233 and the second gap 234 both extend along the second direction Y, which is conducive to making the shape of the first dissociative portion 231 more regular, thus facilitating the connection between the first electrode tab 10 and the first empty foil area 2311 of the first dissociative portion 231.

In some embodiments, referring to FIG. 5, an extension direction of the first gap 233 and an extension direction of the second gap 234 are both inclined relative to the second direction Y, and along the second direction Y, the distance between the first gap 233 and the first electrode tab 10 in the first direction X gradually decreases, and the distance between the second gap 234 and the first electrode tab 10 in the first direction X gradually decreases. In the embodiment in which the first electrode tab 10 includes a first metal part 11 and a first electrode tab adhesive 12, the first metal part 11 of the first electrode tab 10 is welded to the first electrode plate 20. Along a direction opposite to the second direction Y, the first electrode tab adhesive 12 is located on one side of the first electrode plate 20. By setting the extension directions of the first gap 233 and the second gap 234 according to the above embodiment, it is conducive to reducing the risk that the cutting knife 101 or other separation tool such as punching head interferes with the first electrode tab adhesive 12 in the cutting process of the first gap 233 and the second gap 234.

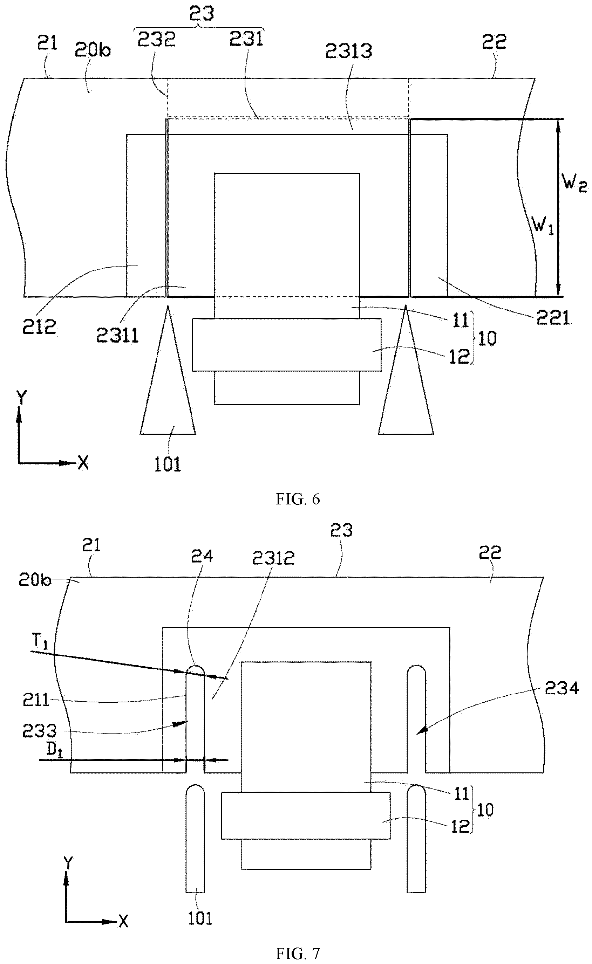

In some embodiments, referring to FIG. 6, when viewed along the third direction Z, a projection of the first electrode tab 10 on the first electrode plate 20 has a length of Wi along the second direction Y, and along the second direction Y, the length of the first dissociative portion 231 is W₂, which satisfies formula 1: W₁/2≤W₂≤3W₁/2. The length W₂ of the first dissociative portion 231 along the second direction Y is equal to the length of the first gap 233 and the second gap 234 along the second direction Y. In a case that W₁ and W₂ satisfy formula 1, it is conducive to making the moving distance of the first dissociative portion 231 along the third direction Z satisfy the requirement that the first electrode tab 10 moves to a position in the third direction Z without going beyond the first active substance layer 20b of the first section 21 and the second section 22, also to reducing the risk that the third section 23 is separated from the first section 21 and the second section 22 since the length of the first gap 233 and the second gap 234 along the second direction Y is too large.

In some embodiments, referring to FIG. 6 and FIG. 7, the first dissociative portion 231 has a first wall 2312 facing to the first section 21, the first section 21 has a second wall 211 facing to the first dissociative portion 231, and a third wall 24 is connected between the first wall 2312 and the second wall 211. Along the first direction X, the distance between the first wall 2312 and the second wall 211 is D₁, which satisfies formula 2: W₂≥D₁≥W₂/20. In a case that the first electrode plate 20 is stressed, making D₁ and W₂ satisfy formula 2 is conducive to reducing the risk of cracking at the third wall due to stress concentration at the third wall 24 since D₁ is too small. In addition, by limiting D₁≤W₂, D₁ is not too large, which reduces the risk that the part of the first electrode plate 20 originally provided with the first active substance layer is removed, thus improving the energy density of the electrode assembly 100.

In some embodiments, referring to FIG. 6 and FIG. 7, the first dissociative portion 231 has a first wall 2312 facing to the first section 21, the first section 21 has a second wall 211 facing to the first dissociative portion 231, a third wall 24 is connected between the first wall 2312 and the second wall 211, and the third wall 24 is a concave arc-shaped wall. In a case that the third section 23 is stressed, the third wall 24 being a concave arc-shaped wall is conducive to reducing the stress on the third wall 24, thus reducing the risk of cracking at the third wall 24.

In some embodiments, referring to FIG. 6 and FIG. 7, along the first direction X, the distance between the first wall 2312 and the second wall 211 is D₁, and the diameter corresponding to the third wall 24 is T₁, which satisfies formula 3: D₁≤T₁≤5D₁. In a case that the diameter T₁ corresponding to the third wall 24 satisfies formula 3, it can achieve the effect that the third wall 24 is an arc-shaped wall, and is conducive to reducing the risk of stress concentration since the transition between the third wall 24 and the first wall 2312 is not mild enough due to the excessive curvature of the third wall 24, or to reducing the risk of stress concentration since the transition between the third wall 24 and the second wall 211 is not mild enough.

In some embodiments, referring to FIG. 6, the first dissociative portion 231 further has a collection layer area 2313 with the first active substance layer 20b, and along the second direction Y, the collection layer area 2313 is located between the first connection portion 232 and the first empty foil area 2311. Providing the collection layer area 2313 on the first dissociative portion 231 is conducive to increasing the area of the first active substance layer 20b, thus improving the energy density of the electrode assembly 100. In addition, the collection layer area 2313 is provided between the first connection portion 232 and the first empty foil area 2311, rather than on the side of the first empty foil area 2311 facing to the first section 21 or the side of the first empty foil area 2311 facing to the second section 22, thus reducing the risk that the first active substance layer 20b in the collection layer area 2313 interferes with the movement of the first electrode tab 10 in the third direction Z, and ensuring that the first electrode tab 10 does not go beyond the first active substance layer 20b of the first section 21 and the second section 22 in the third direction Z.

In some embodiments, referring to FIG. 6, the surface of the first section 21 has a first side empty foil area 212 without the first active substance layer 20b, and along the first direction X, the first side empty foil area 212 is located on one side of the first empty foil area 2311, and the first empty foil area 2311 is dissociated from the first side empty foil area 212. The first side empty foil area 212 is provided, so that the two opposite sides of the part where the first dissociative portion 231 is separated from the first section 21 are not provided with the first active substance layer 20b, thus reducing the risk that the first active substance layer 20b interferes with the separation tool such as the cutting knife 101 or punching head, and facilitating the formation of the first gap 233 and the second gap 234.

In some embodiments, referring to FIG. 6, the surface of the second section 22 has a second side empty foil area 221 without the first active substance layer 20b, and along the first direction X, the second side empty foil area 221 is located on one side of the first empty foil area 2311 opposite to the first side empty foil area 212, and the first empty foil area 2311 is dissociated from the second side empty foil area 221. The second side empty foil area 221 is provided, so that the two opposite sides of the part where the first dissociative portion 231 is separated from the second section 22 are not provided with the first active substance layer 20b, thus reducing the risk that the first active substance layer 20b interferes with the separation tool such as the cutting knife 101 or punching head, and facilitating the formation of the first gap 233 and the second gap 234.

In some embodiments, the first dissociative portion 231 and the first connection portion 232 are not provided with the first active substance layer 20b, so that the first electrode tab 10 can extend out of the first electrode plate 20 along the second direction Y, thus making the same first electrode tab 10 have two positions from which the polarity of the first electrode plate 20 can be led out.

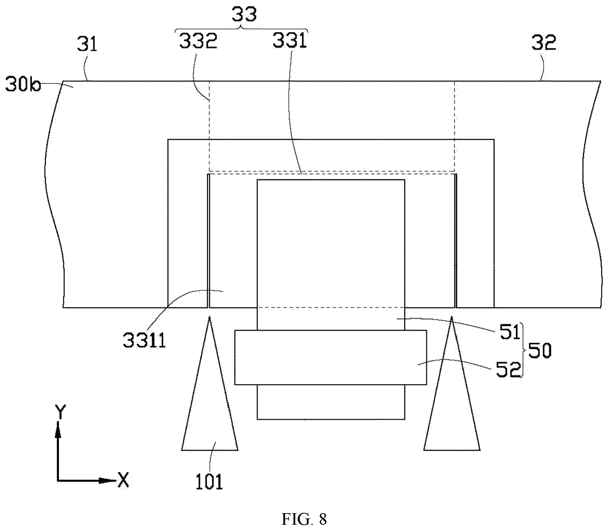

In some embodiments, referring to FIG. 1 and FIG. 8, the electrode assembly 100 further includes a second electrode tab 50, and the second electrode tab 50 is connected to the second electrode plate 30. The polarity of the second electrode tab 50 may be positive or negative, and the polarity of the second electrode tab 50 is opposite to that of the first electrode tab 10. For example, the first electrode tab 10 is a positive electrode tab, and the second electrode tab 50 is a negative electrode tab. For another example, the first electrode tab 10 is a negative electrode tab, and the second electrode tab 50 is a positive electrode tab.

In some embodiments, referring to FIG. 8, the second electrode tab 50 includes a second metal part 51 and a second electrode tab adhesive 52. The second metal part 51 is connected to the second electrode plate 30. The material of the second metal part 51 is the same as that of the second electrode plate 30. The second electrode tab adhesive 52 is coated on the second metal part 51. The second electrode tab 50 and the second electrode plate 30 are connected by welding such as resistance welding, laser welding, arc welding or ultrasonic welding.

In some embodiments, referring to FIG. 1 and FIG. 8, the second current collector 30a includes a fourth section 31, a fifth section 32 and a sixth section 33. Along the first direction X, the sixth section 33 is located between the fourth section 31 and the fifth section 32. One of the fourth section 31 and the fifth section 32 serves as a starting section for the winding of the second electrode plate 30, while the other of the fourth section 31 and the fifth section 32 serves as an ending section for the winding of the second electrode plate 30. Both the fourth section 31 and the fifth section 32 are at least partially provided with a second active substance layer 30b. The sixth section 33 is connected to the second electrode tab 50. The sixth section 33 includes a second dissociative portion 331 and a second connection portion 332 sequentially connected along the second direction Y. The second connection portion 332 connects the fourth section 31 and the fifth section 32. Along the first direction X, one side of the second dissociative portion 331 is dissociated from the fourth section 31, and the side of the second dissociative portion 331 opposite to the fourth section 31 is dissociated from the fifth section 32. The second dissociative portion 331 has a second empty foil area 3311 without the second active substance layer 30b. One side of the second empty foil area 3311 in the third direction Z is connected to the second electrode tab 50.

In the embodiments above, along the first direction X, one side of the second dissociative portion 331 is dissociated from the fourth section 31, which is conducive to making the second dissociative portion 331 move along the third direction Z relative to the first section 21 and the second section 22, thus increasing the moving distance of the second electrode tab 50 along the third direction Z relative to the fourth section 31 and the fifth section 32. In the second electrode plate 30 of the wound structure, the second electrode tab 50 is squeezed along the third direction Z or in a direction opposite to the third direction Z, causing the second electrode tab 50 to move along the third direction Z until the second electrode tab 50 does not go beyond the second active substance layer 30b of the fourth section 31 and the fifth section 32 in the third direction Z. The second electrode tab 50 not going beyond the second active substance layer 30b of the fourth section 31 and the fifth section 32 in the third direction Z is conducive to improving the spatial utilization rate of the electrode assembly 100 in the third direction Z. In addition, the second electrode tab 50 is connected to the second dissociative portion 331 and the second dissociative portion 331 is dissociated from the fourth section 31 and the fifth section 32, which is conducive to reducing the deformation of the sixth section 33 when the second dissociative portion 331 moves along the third direction Z, thus reducing the risk that the second active substance layer 30b at the boundary of the area without the second active substance layer 30b and the area with the second active substance layer 30b is separated from the second current collector 30a.

It should be noted that, for other embodiments and beneficial effects of structures between the second electrode tab 50 and the second electrode plate 30 of this application, a reference may be made to the embodiments and beneficial effects of the structures between the first electrode tab 10 and the first electrode plate 20 mentioned above, which will not be repeated here.

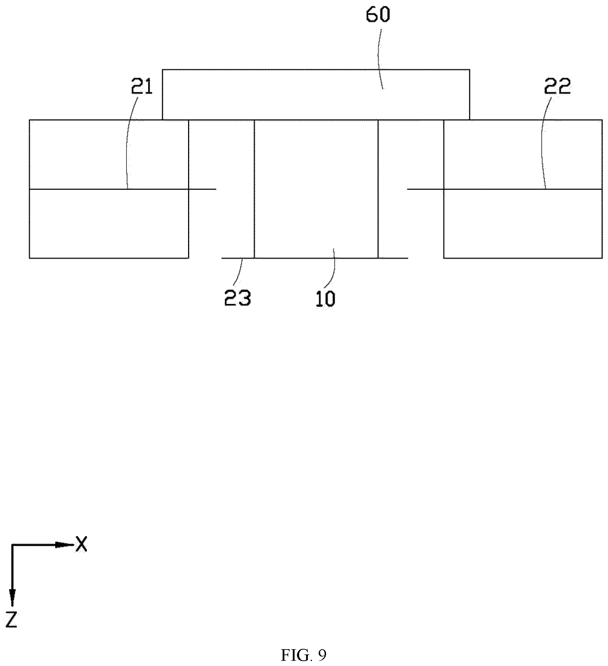

In some embodiments, referring to FIG. 9, the electrode assembly 100 further includes a first insulating adhesive 60, the first insulating adhesive 60 is located on the side of the first electrode tab 10 opposite to the third section 23, and the first insulating adhesive 60 is connected to the first section 21, the second section 22 and the first electrode tab 10. The first insulating adhesive 60 pays a role of fixing the first electrode tab 10. In addition, the first insulating adhesive 60 can reduce the risk that the first electrode tab 10 damages the separator 40 or the second electrode plate 30.

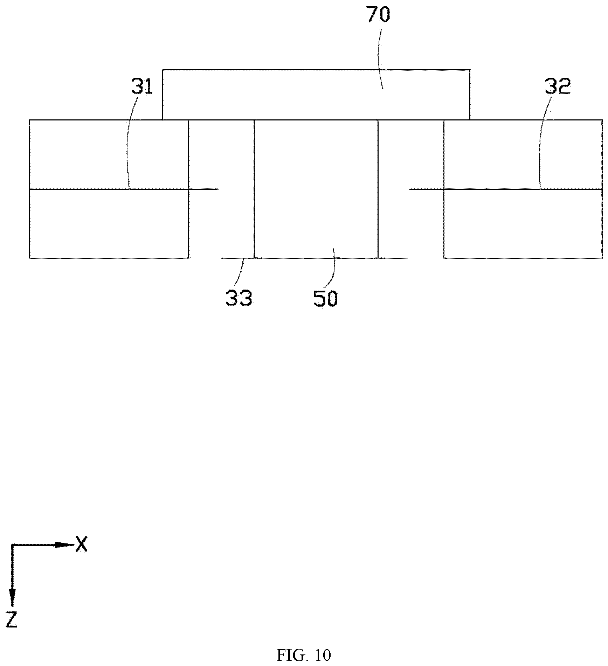

In some embodiments, referring to FIG. 10, the electrode assembly 100 further includes a second insulating adhesive 70, the second insulating adhesive 70 is located on the side of the second electrode tab 50 opposite to the sixth section 33, and the second insulating adhesive 70 is connected to the fourth section 31, the fifth section 32 and the second electrode tab 50. The second insulating adhesive 70 plays a role of fixing the second electrode tab 50. In addition, the second insulating adhesive 70 can reduce the risk that the second electrode tab 50 damages the separator 40 or the first electrode plate 20.

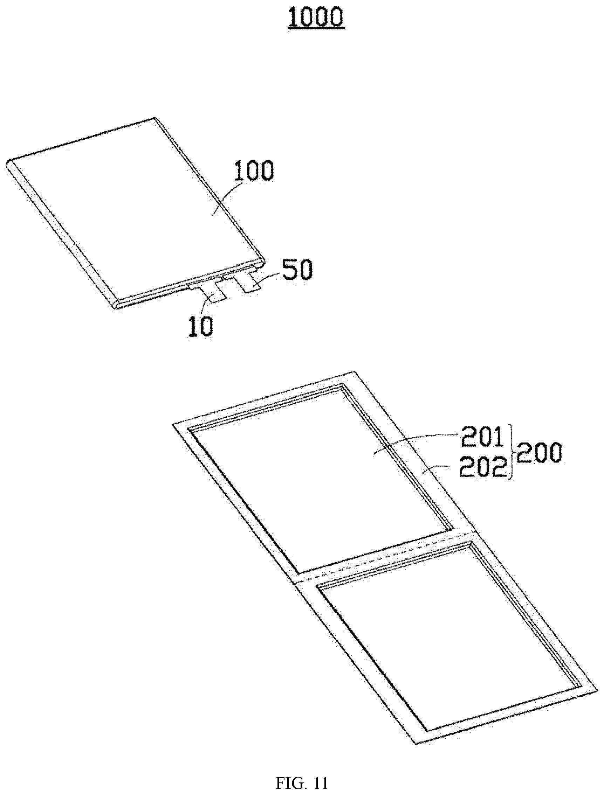

Please refer to FIG. 11. An embodiment of this application further provides an electrochemical apparatus 1000. The electrochemical apparatus 1000 includes a housing 200 and the electrode assembly 100 in any one of the embodiments above. At least a portion of the electrode assembly 100 is provided in the housing 200.

The first electrode tab 10 of the electrode assembly 100 does not go beyond the first active substance layer 20b of the first section 21 and the second section 22 in the third direction Z, thus improving the spatial utilization rate of the electrode assembly 100 in the third direction Z, and improving the energy density of the electrochemical apparatus 1000. The first dissociative portion 231 is dissociated from the first section 21 and the second section 22, which is conducive to reducing the deformation of the third section 23 when the first dissociative portion 231 moves along the third direction Z, thus reducing the risk that the first active substance layer 20b at the boundary of the area without the first active substance layer 20b and the area with the first active substance layer 20b is separated from the first current collector 20a, and improving the reliability of the electrochemical apparatus 1000.

In some embodiments, referring to FIG. 11, the housing 200 includes a first portion 201 and a second portion 202 extending outwards from the first portion 201. The wound structure formed by stacking and winding the first electrode plate 20, the separator 40 and the second electrode plate 30 is accommodated in the first portion 201. The first electrode tab 10 and the second electrode tab 50 extend out of the housing 200 from the second portion 202.

In some embodiments, the housing 200 includes an aluminum-plastic film, and the electrochemical apparatus 1000 includes a flexible battery.

Since the electrochemical apparatus 1000 adopts the technical solution in any embodiment of the electrode assembly 100, it has at least the beneficial effects brought by the technical solution in any embodiment of the electrode assembly 100, which will not be repeated here.

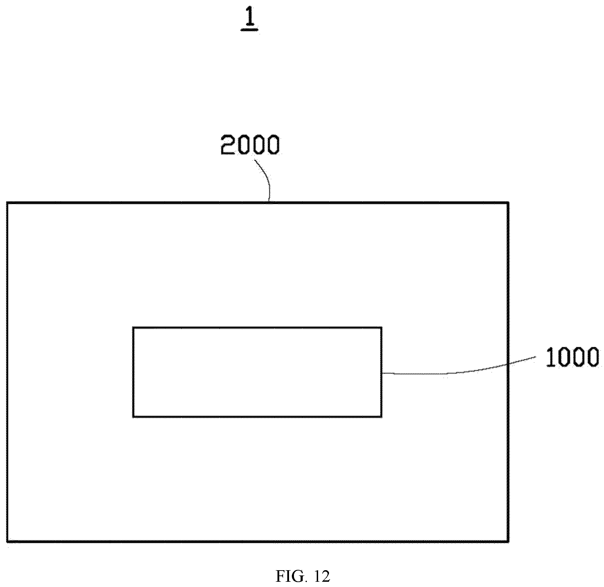

Refer to FIG. 12. An embodiment of this application further provide an electrical device 1. The electrical device 1 includes a device main body 2000 and the electrochemical apparatus 1000 in any one of the embodiments above. The electrochemical apparatus 1000 is mounted to the device main body 2000. The energy density and reliability of the electrochemical apparatus 1000 are improved, which is conducive to improving the use duration after charging and the service life of the electrical device 1, and reducing the failure rate of the electrical device 1.

Since the electrical device 1 adopts the technical solution in any embodiment of the electrochemical apparatus 1000, it has at least the beneficial effects brought by the technical solution in any embodiment of the electrochemical apparatus 1000, which will not be repeated here.

The electrical device 1 may be a smartphone, a laptop computer, head-mounted VR glasses, a smart bracelet, a drone, a cleaning robot, an electric car, an electric two-wheeled vehicle, an electric motorcycle, or a wireless vacuum cleaner.

In addition, those skilled in the art should understand that the above embodiments are only used for describing this application, instead of limiting this application. Any appropriate changes and modifications made to the above embodiments still fall within the scope of protection of this application, as long as they are within the substantive scope of this application.

## Claims

1. An electrode assembly (100), comprising a first electrode tab (10), a first electrode plate (20), a second electrode plate (30) and a separator (40); the separator (40) being located between the first electrode plate (20) and the second electrode plate (30); the first electrode plate (20), the separator (40) and the second electrode plate (30) being stacked and wound; the first electrode plate (20) comprising a first current collector (20a) and a first active substance layer (20b); **characterized in that**, the first current collector (20a) comprising:
a first section (21), a surface of the first section (21) is at least partially provided with the first active substance layer (20b);
a second section (22), a surface of the second section (22) is at least partially provided with the first active substance layer (20b);
a third section (23), along a first direction (X), the third section (23) is located between the first section (21) and the second section (22);
along a second direction (Y), the third section (23) comprising a first dissociative portion (231) and a first connection portion (232) connected sequentially;
the first connection portion (232) connecting the first section (21) and the second section (22);
along the first direction (X), the first dissociative portion (231) comprises a first side facing the first section (21) and a second side facing the second section (22), the first side is dissociated from the first section (21) and the second side is dissociated from the second section (22);
the first dissociative portion (231) having a first empty foil area (2311) without the first active substance layer (20b);
one side of the first empty foil area (2311) in a third direction (Z) being connected to the first electrode tab (10);
the third direction (Z) being a thickness direction of the first electrode plate (20);
the first direction (X), the second direction (Y), and the third direction (Z) being perpendicular to each other.

2. The electrode assembly (100) according to claim 1, **characterized in that**,
a first gap (233) is provided between the first dissociative portion (231) and the first section (21); and
a second gap (234) is provided between the first dissociative portion (231) and the second section (22).

3. The electrode assembly (100) according to claim 2, **characterized in that**, the first gap (233) and the second gap (234) both extend along the second direction (Y).

4. The electrode assembly (100) according to claim 2, **characterized in that**,
an extension direction of the first gap (233) and an extension direction of the second gap (234) are both inclined relative to the second direction (Y);
along the second direction (Y), a distance between the first gap (233) and the first electrode tab (10) in the first direction (X) gradually decreases; and
a distance between the second gap (234) and the first electrode tab (10) in the first direction (X) gradually decreases.

5. The electrode assembly (100) according to any one of claims 1-4, **characterized in that**,
when viewed along the third direction (Z), a projection of the first electrode tab (10) on the first electrode plate (20) has a length of Wi along the second direction (Y);
along the second direction (Y), a length of the first dissociative portion (231) is W₂; **characterized in that**,
W₁/2≤W₂≤3W₁/2.

6. The electrode assembly (100) according to claim 5, **characterized in that**,
the first dissociative portion (231) has a first wall (2312) facing towards the first section (21);
the first section (21) has a second wall (211) facing towards the first dissociative portion (231);
a third wall (24) is connected between the first wall (2312) and the second wall (211); and
along the first direction (X), a distance between the first wall (2312) and the second wall (211) is D₁; **characterized in that**,
W₂≥D₁≥W₂/20.

7. The electrode assembly (100) according to any one of claims 1-5, **characterized in that**,
the first dissociative portion (231) has a first wall (2312) facing towards the first section (21);
the first section (21) has a second wall (211) facing towards the first dissociative portion (231);
a third wall (24) is connected between the first wall (2312) and the second wall (211); and
the third wall (24) is a concave arc-shaped wall.

8. The electrode assembly (100) according to claim 7, **characterized in that**, along the first direction (X), a distance between the first wall (2312) and the second wall (211) is D₁;
a diameter corresponding to the concave arc-shaped wall (24) is T₁; and D₁≤T₁≤5D₁.

9. The electrode assembly (100) according to any one of claims 1-8, **characterized in that**,
the first dissociative portion (231) further has a collection layer area (2313) with the first active substance layer (20b) on the surface; and
along the second direction (Y), the collection layer area (2313) is located between the first connection portion (232) and the first empty foil area (2311).

10. The electrode assembly (100) according to claim 9, **characterized in that**,
the surface of the first section (21) has a first side empty foil area (212) without the first active substance layer (20b);
along the first direction (X), the first side empty foil area (212) is located on one side of the first empty foil area (2311); and
the first side empty foil area (212) is dissociated from the first empty foil area (2311).

11. The electrode assembly (100) according to any one of claims 1-8, **characterized in that**, the first dissociative portion (231) and the first connection portion (232) are not provided with the first active substance layer (20b).

12. An electrochemical apparatus (1000), **characterized in that**, comprising a housing (200) and the electrode assembly (100) according to any one of claims 1-11, at least a portion of the electrode assembly (100) being provided in the housing (200).

13. An electrical device, **characterized in that**, comprising a device main body (2000) and the electrochemical apparatus (1000) according to claim 12, the electrochemical apparatus (1000) being mounted to the device main body (2000).
